(19) Europäisches Patentamt
European Patent Office
Office européen des brevets

(11) Veröffentlichungsnummer: **0 023 314**
**B1**

(12) # EUROPÄISCHE PATENTSCHRIFT

(45) Veröffentlichungstag der Patentschrift: **20.07.83**

(51) Int. Cl.³: **C 08 G 75/02**

(21) Anmeldenummer: **80104141.9**

(22) Anmeldetag: **16.07.80**

(54) **Verfahren zur Herstellung von Polyarylensulfiden.**

(30) Priorität: **28.07.79 DE 2930797**

(43) Veröffentlichungstag der Anmeldung: **04.02.81 Patentblatt 81/5**

(45) Bekanntmachung des Hinweises auf die Patenterteilung: **20.07.83 Patentblatt 83/29**

(84) Benannte Vertragsstaaten: **DE FR GB IT**

(56) Entgegenhaltungen:
**US-A-3 919 177**

(73) Patentinhaber: **BAYER AG, Zentralbereich Patente, Marken und Lizenzen, D-5090 Leverkusen 1, Bayerwerk (DE)**

(72) Erfinder: **Idel, Karsten, Dr., Scheiblerstrasse 81, D-4150 Krefeld (DE)**
Erfinder: **Merten, Josef, Dr., An der Blankstrasse 33a, D-4052 Korschenbroich 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 023 314 B1

# Verfahren zur Herstellung von Polyarylensulfiden

Polyarylensulfide sind im Prinzip bekannt (siehe beispielsweise US-PS 25 38 941 und US-PS 25 13 188). Die Herstellung kann in Substanz aus den entsprechenden Halogenaromaten und Alkali oder Erdalkalisulfiden erfolgen.

Die Herstellung mittels Alkalisulfiden kann auch unter Mitverwendung von polaren Lösungsmitteln erfolgen (siehe dazu beispielsweise US-PS 33 54 129 bzw. DOS 14 68 782), wobei gegebenenfalls Kupferkatalysatoren mitverwendet werden können.

Gemäss DE-OS 24 53 749 bzw. US-PS 39 19 177 werden für die Herstellung von Polyarylensulfiden Alkalicarboxylate als Katalysatoren verwendet. Als Lösungsmittel dienen Amide und zur Aktivierung der Schwefelspender anorganische Basen.

Gemäss DE-OS 26 23 363 bzw. US-PS 40 38 261 werden als Katalysatoren für die Herstellung von Arylensulfidpolymeren Lithiumchlorid oder Lithiumcarboxylat eingesetzt.

N-Methylpyrrolidon und Alkalihydroxide vervollständigen das Katalysatorsystem.

Gemäss US-PS 40 38 259 werden Alkalicarbonate in Kombination mit Alkalycarboxylaten, gemäss US-PS 40 38 263 Lithiumhalogenide und gemäss US-PS 40 39 518 Lithiumcarbonate als Katalysatoren für die Polyphenylensulfidherstellung eingesetzt.

Gemäss DE-OS 26 23 362 bzw. US-PS 40 38 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäss DE-OS 26 23 333 bzw. US-PS 40 46 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem.

Gemäss DE-OS 28 17 731 bzw. US-PS 41 16 947 werden Natriumcarboxylate in Anwesenheit definierter Mengen Wasser als Katalysatoren für die Herstellung von verzweigten Arylensulfidpolymeren verwendet.

Gemäss DE-OS 21 31 996 werden Polyarylensulfide durch den Zusatz von Organophosphinsäuren oder organischen Phosphiten stabilisiert.

Gegenstand der vorliegen Erfindung ist demgegenüber ein Verfahren zur Herstellung von Polyarylensulfiden, die gegebenenfalls verzweigt sein können, aus

a) p-Dihalogenbenzolen, die aus 50 bis 100 Mol-% Verbindungen der Formel 1

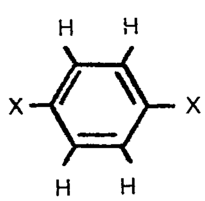

1

und aus 0 bis 50 Mol-% Dihalogenbenzolen der Formel 2

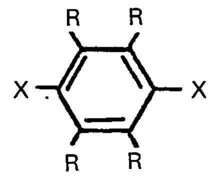

2

wobei X gleich oder verschieden ist und R Fluor, Chlor, Brom oder Jod ist und Wasserstoff, $C_1$-$C_{20}$-Alkyl, $C_5$-$C_{20}$-Cycloalkyl, $C_6$-$C_{24}$-Aryl, $C_7$-$C_{24}$Alkaryl oder $C_7$-$C_{24}$-Aralkyl sein kann, wobei jeweils mindestens ein R verschieden von Wasserstoff ist, und

b) O bis 2,0 Mol-%, bezogen auf den p-Dihalogenbenzolanteil eines Polyhalogenaromaten der Formel 3

$$Ar\,X_n \qquad \underline{3}$$

wobei Ar ein beliebiger aromatischer Rest mit 6 bis 24 C-Atomen und mindestens 3 freien Wertigkeiten ist, X die gleiche Bedeutung wie in Formel 1 und 2 hat und $n \geqslant 3$ ist, und einem

c) Alkalisulfid, bevorzugt Natrium- oder Kaliumsulfid oder deren Mischen, bevorzugt in Form der Hydrate oder wässriger Mischungen, gegebenenfalls zusammen mit Alkalihydroxiden in einem

d) polaren Lösungsmittel, bevorzugt einem Amid oder Lactam, insbesondere einem N-Alkyllactam,

wobei das Molare Verhältnis von a) zu c) im Bereich von 0,98:1 bis 1,02:1 und von c) zu d) im Bereich von 1:1 bis 1:10 liegt, bei einer Polykondensationszeit von bis zu 60 Stunden, vorzugsweise von 2 bis 15 Stunden, und einer Polykondensationstemperatur zwischen 160 und 285 °C, bevorzugt zwischen 190 und 275°C, das dadurch gekennzeichnet ist, dass die Reaktion in Anwesenheit von 0,05 - 2,0 Mol, bevorzugt 0,1 - 1,5 Mol, bezogen auf 1 Mol Alkalisulfid, von Dialkalisalzen, insbesondere von Dinatriumsalzen, von Phosphonsäuren der allgemeinen Formel 4,

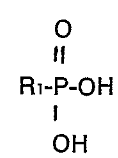

4

in der $R_1$ die Bedeutung von R aus Formel 2 hat und ausserdem ein $C_2$-$C_{20}$-Alkenyl, $C_2$-$C_{20}$-Alkinyl oder $C_5$-$C_{20}$-Cycloalkenyl sein kann, durchgeführt wird, wobei vorzugsweise die Dialkalisalze der Phosphonsäuren, in Form ihrer Hydrate oder in wässrigen Mischungen eingesetzt werden können und vor der Zugabe der p-Dihalogenbenzole eine oder mehrere Entwässerungsstufen durchgeführt werden.

Nach dem erfindungsgemässen Verfahren werden Polyarylensulfide mit höheren inhärenten Viskositäten bzw. Grenzviskositätszahlen und niedrigerem Schmelzfluss erhalten, als nach einem analogen Verfahren ohne die Mitverwendung der Dialkaliphosphonate.

Die erfindungsgemäss erhältlichen Polyarylensulfide sind somit thermoplastische Kunststoffe mit einem guten mechanischen Eigenschaftsbild und gleichzeitig guter Verarbeitbarkeit.

Die Darstellung solcher Phosphonsäuren der Formel 4 und ihrer Salze ist ausführlich in Houben-Weyl — «Methoden der organischen Chemie» — Bd. XII, 1, S. 348 ff, Georg Thieme Verlag, Stuttgart, 1963, beschrieben. Die Dialkalisalze dieser Phosphonsäuren können z.B. direkt aus den freien Säuren durch Zugabe stöchiometrischer Mengen Alkalihydroxide z.B. im wässrigen Medium oder anderen Lösungsmitteln erhalten werden. Anschliessend kann das Lösungsmittel teilweise oder völlig abdestilliert werden. Wird Wasser als Lösungsmittel eingesetzt, so besteht eine bevorzugte Darstellungsweise und Verwendung der erfindungsgemässen Dialkalisalze der Phosphonsäuren darin, nach der Neutralisation das Wasser nicht oder nur zu einem Teil abzudestillieren und die Phosphonsäuresalze in Form ihrer wässrigen Mischungen für das erfindungsgemässe Verfahren zu verwenden. Ebenso können die erfindungsgemässen Dialkalisalze der Phosphonsäuren auch direkt in der Reaktionslösung durch Zusammengeben der Phosphonsäure und stöchiometrischen Mengen Alkalihydroxide z.B. in Form wässriger Mischungen erzeugt werden. In einer anschliessenden Dehydratisierungsstufe kann dieses Wasser wieder entfernt werden. Auf diese Weise kann eine homogene Verteilung der Salze erreicht werden.

Bevorzugte Dialkalisalze der Phosphonsäuren sind die Dinatriumsalze.

Es können sowohl einheitliche Dialkaliphosphonate als auch verschiedene Dialkaliphosphonate für das erfindungsgemässe Verfahren eingesetzt werden.

Auch die Alkalisulfide, bevorzugt Natrium- oder Kaliumsulfid ($Na_2S$ bzw. $K_2S$) oder Mischungen davon, werden vorzugsweise als Hydrate oder in Form ihrer wässrigen Mischungen eingesetzt.

Ebenso können die Alkalisulfide aus Schwefelwasserstoff oder den Alkalihydrogensulfiden und entsprechenden stöchiometrischen Mengen Alkalihydroxiden durch Neutralisation in oder ausserhalb der Reaktionslösung erhalten werden. Es empfiehlt sich auch bei Verwendung der reinen Alkalisulfide zusätzlich Alkalihydroxide zuzugeben, um häufig beigemengte Alkalihydrogensulfide zu neutralisieren.

Erfindungsgemäss geeignete Dialkalisalze, vorsugsweise Dinatriumsalze, sind beispielsweise die der folgenden Phosphonsäuren:
Methan-phosphonsäure,
Ethan-1-phosphonsäure,
Propan-1-phosphonsäure,
Butan-1-phosphonsäure,
Butan-2-phosphonsäure,
Pentan-1-phosphonsäure,
Cyclohexan-1-phosphonsäure,
Vinyl-1-phosphonsäure,
Propen-2-phosphonsäure,
Buten-2-phosphonsäure,
Inden-2-phosphonsäure,
Phenylmethan-phosphonsäure,
(4-Methyl-phenyl)-methan-phosphonsäure,
ß-Naphthyl-methan-phosphonsäure,
2-Phenyl-ethan-1-phosphonsäure,
2,2-Diphenyl-ethan-1-phosphonsäure,
4-Phenyl-butan-1-phosphonsäure,
2-Phenyl-ethylen-1-phosphonsäure,
2,2-Diphenyl-ethylen-1-phosphonsäure,
Phenyl-acetylen-phosphonsäure,
4-Phenyl-butadien-phosphonsäure,
Benzol-phosphonsäure,
4-Methyl-benzol-phosphonsäure,
4-Ethyl-benzol-phosphonsäure und
2-Phenoxy-ethan-1-phosphonsäure.

Beispiele für die erfindungsgemäss einzusetzenden p-Dihalogenbenzole der Formel 1 sind: p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1-Brom-4-jodbenzol. Sie sind allein oder im Gemisch miteinander einsetzbar.

Beispiele für die erfindungsgemäss einzusetzenden p-Dihalogenbenzole der Formel 2 sind 2,5-Dichlortoluol, 2,5-Dichlorxylol, 1-Ethyl-2-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für die erfindungsgemäss einzusetzenden Polyhalogenaromaten der Formel 3 sind: 1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2', 4,4'-Tetrachlorbiphenyl.

Generell kann jedes polare Lösungsmittel für die Reaktion eingesetzt werden, das eine ausreichende Löslichkeit der organischen und anorganischen Reaktanten unter den Reaktionsbedingungen gewährleistet. Bevorzugt werden jedoch Lactame und Amide und besonders bevorzugt N-Alkyllactame eingesetzt.

Lactame in Sinne der vorliegenden Erfindung sind solche von Aminosäuren mit 3 bis 5 C-Atomen, die gegebenenfalls Substituenten am Kohlenstoffgerüst tragen können, die unter Reaktionsbedingungen inert sind, wie z.B. einen Alkylrest mit 1 bis 5 C-Atomen.

N-Alkyllactame im Sinne der vorliegenden Erfindung sind wie die vorstehenden Lactame definiert, tragen jedoch zusätzlich am Stickstoffatom einen Alkylrest mit 1 bis 3 C-Atomen.

Amide im Sinne der Erfindung sind solche von Carbonsäuren mit 1 bis 5 C-Atomen, und bevorzugt solche von Carbonsäuren mit 1 bis 5 C-Atomen, die im Amidstickstoff zwei Alkylreste mit 1 bis 3 C-Atomen tragen.

Beispielsweise kommen als Lösungsmittel in Frage:

Dimethylformamid, Dimethylacetamid, Caprolactam, N-Methylcaprolactam, N-Ethylcaprolactam, N-Isopropylcaprolactam, N-Methyl-2-pyrrolidon, N-Ethyl-2-pyrrolidon, N-Isopropyl-2-pyrrolidon, N-Methyl-3-methyl-2-pyrrolidon, N-Methyl-5-methyl-2-pyrrolidon, N-Methyl-3,4,5-trimethil-2-pyrrolidon, N-Methyl-2-piperidon, N-Ethyl-2-piperidon, N-Methyl-6-methyl-2-piperidon, N-Methyl-3-ethyl-2-piperidon, N-Methyl-2-oxohexamethylenimin, N-Ethyl-2-oxohexamethylenimin.

Es können auch Mischungen der vorstehenden Lösungsmittel gewählt werden.

Nach dem erfindungsgemässen Verfahren können das p-Dihalogenbenzol, gegebenenfalls mit einem Polyhalogenaromaten der Formel 3, das Alkalisulfid gegebenenfalls mit Alkalihydroxid und die Dialkalisalze der Phosphonsäuren im Prinzip in jeder Form in dem polaren Lösungsmittel, das bevorzugt ein Amid oder Lactam und besonders bevorzugt ein N-Alkyllactam ist, gemischt und zur Reaktion gebracht werden. Dabei ist es jedoch von Vorteil, wenn das Wasser, das in Form von Hydratwasser der Alkalisulfide und Alkalisalze der Phosphonsäuren und/oder frei als Mischungskomponente von wässrigen Lösungen der erfindungsgemäss einzusetzenden Sulfide und Phosphonate vorliegen kann, vor der Zugabe und Umsetzung des p-Dihalogenbenzols mindestens grösstenteils entfernt wird.

Die Entwässerung kann beispielsweise durch Abdestillieren des Wassers aus der Reaktionslösung erfolgen. In einer bevorzugten Reaktionsführung wird dabei das N-Alkyllactam zusammen mit den erfindungsgemässen Phosphonaten vorgelegt und in einer ersten Entwässerungsstufe das Hydrat- oder Mischungswasser entfernt. Anschliessend werden die gewünschten Anteile Alkalisulfid zugegeben und gegebenenfalls eine zweite Entwässerungsstufe durchgeführt. Danach werden das p-Dihalogenbenzol und gegebenenfalls die Polyhalogenverbindung der Formel 3 hinzugefügt und unter weiterer Temperatursteigerung die eigentliche Polymerreaktion in Gang gesetzt.

Bei den Entwässerungsstufen ist die Temperatur langsam zu steigern, um ein Aufschäumen des Reaktionsgemisches zu verhindern.

Sobald die Siedetemperatur des Lösungsmittels erreicht ist, kann mit der eigentlichen Polymerreaktion begonnen werden.

Die Reaktionstemperatur der erfindungsgemässen Polykondensation liegt in der Regel im Bereich von 160°C bis 285°C, bevorzugt im Bereich von 190 bis 275°C. Die Reaktionszeit kann bis zu 60 Stunden betragen, liegt jedoch vorzugsweise zwischen 2 und 15 Stunden. Eine stufenweise Steigerung der Reaktionstemperatur während dieser Zeit ist von Vorteil.

Das p-Dihalogenbenzol und das Alkalisulfid werden möglichst äquimolar umgesetzt. Das Molverhältnis p-Dihalogenbenzol/Alkalisulfid liegt demgemäss im Bereich von 0,98:1 bis 1,02:1.

Die erfindungsgemäss einzusetzenden Polyhalogenaromaten der Formel 3 können in einer Menge von 0 bis 2,0 Mol.-%, bezogen auf den Anteil p-Dihalogenbenzol, zugesetzt werden.

Die Menge Lösungsmittel kann in einem weiten Bereich gewählt werden, nämlich von 1 bis 10 Mol, pro Mol Alkalisulfid.

Je nach Anteilen von Alkalihydrogensulfid im technischen Alkalisulfid wird die Menge Alkalihydroxid gewählt. Sie kann bis 0,8 Mol pro Mol Alkalisulfid liegen, kann jedoch gegebenenfalls auch höher gewählt werden.

Als Alkalihydroxide werden z.B. Lithiumhydroxid, Natriumhydroxid und Kaliumhydroxid oder Mischungen davon eingesetzt. Es können auch für den gleichen Zweck Alkalicarbonate wie Lithiumcarbonat, Natriumcarbonat, Kaliumcarbonat sowie deren Mischungen verwendet werden.

Die Menge der erfindungsgemässen Alkaliphosphonate kann je nach den Versuchsbedingungen variiert werden und liegt zwischen 0,05 und 2 Mol, bevorzugt 0,1 bis 1,5 Mol, pro Mol Alkalisulfid.

Die Aufarbeitung des Reaktionsgemisches kann in mannigfaltiger Weise erfolgen.

Das Polyarylensulfid kann direkt aus der Reaktionslösung oder erst nach Zugabe z.B. von Wasser nach üblichen Verfahrenweisen abgetrennt werden, beispielsweise durch Filtration oder durch Zentrifugieren.

Nach der Filtration schliesst sich im allgemeinen zur Entfernung von salzartigen Beimengungen, die den Polymeren anhaften können, wie z.B. die Alkalisulfide oder die erfindungsgemässen Salze der Phosphonsäuren, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschliessende Wäsche wie oben beschrieben, gewonnen werden.

Gegenüber der unkatalysierten Darstellung von Polyarylensulfiden werden nach dem erfindungsgemässen Verfahren Polyarylensulfide mit einer höheren Grenzviskositätszahl und einem niedrigeren Schmelzfluss erhalten.

In den deutschen Offenlegungsschriften 26 23 333 und 26 23 363 wird als Bezugsgrösse für das Molekulargewicht die inhärente Viskosität in 1-Chlor-naphthalin bei 206°C und einer Konzentration von 0,4 g Polymer/100 ml Lösungsmittel gemessen. In diesem Temperatur- und Konzentrationsbereich ist jedoch die Gefahr der Bildung von Assoziaten relativ gross. Zur Charakterisierung der erfindungsgemässen Polyarylensulfide wird deshalb die Grenzviskositätenzahl $[\eta]$ bestimmt, die sich aus Messungen inhärenter Viskositäten mit der Extrapolation der Konzentration gegen Null ergibt.

$$[\eta] = \frac{\ln \eta\ rel}{C} \quad (C \rightarrow O)$$

Der im Vergleich zu unkatalysiert erhaltenen Polyarylensulfiden niedrige Schmelzfluss der erfindungsgemässen Polyarylensulfide bietet besondere verarbeitungstechnische Vorteile. (Das Schmelzfliessverhalten wird nach ASTM D 1238-70, unter Verwendung eines 5 kg Gewichtes und bei einer Temperatur von 316°C gemessen, wobei der Wert in g/10 Min. ausgedrückt wird).

Da der Schmelzfluss der erfindungsgemässen Polyarylensulfide im Bereich von 1 - 700 g/10 Min., vorzugsweise 1 - 250 g/10 Min. liegt, kann eine sonst nötige zusätzliche Aushärtungsstufe erspart werden und die Produkte direkt ohne weitere Aushärtung über Extrusion, Extrusionsblasen Spritzgiessen oder sonst üblichen Verarbeitungstechniken zu Folien, Formkörpern oder Fasern verarbeitet werden, welche in üblicher Weise Verwendung finden als Automobil-Teile, Armaturen, Elektro-Teile wie z.B. Schalter, Elektronische Tafeln, Chemikalienresistente Teile und Apparate wie Pumpen-Gehäuse und Pumpen-Flügelräder, Ätzbadschalen, Dichtungsringe, Teile von Büromaschinen und Fernmeldeeinrichtungen sowie Haushaltsgeräte, Ventile, Kugellagerteile etc.

Durch zusätzliche Bearbeitungsschritte wie z.B. Tempern oder Abmischen können die Eigenschaften der Polyarylensulfide modifiziert bzw. optimiert werden.

Die erfindungsgemässen Polyarylensulfide können auch mit anderen Plymeren, mit Pigmenten und Füllstoffen, wie beispielsweise Graphit, Metallpulver, Glaspulver, Quarzmehl oder Glasfasern, gemischt oder mit der für Polyarylensulfide üblichen Additiven, wie beispielsweise üblichen Stabilisatoren oder Entformungsmitteln, versetzt werden.

Im folgenden wird die Erfindung durch Beispiele verdeutlicht.

Beispiel 1

Dieses Beispiel beschreibt als Vergleichsbeispiel die Darstellung von Polyphenylensulfid ohne die erfindungsgemässe Katalyse (US-Pat. 33 54 129).

In einem mit Rührer ausgerüsteten Autoklaven wurden 130 g (1,0 Mol/60 %ige Ware) Natriumsulfid ($Na_2S$ x $H_2O$) und 300 g N-Methyl-2-pyrrolidon zusammengegeben. Das Gemisch wurde mit Stickstoff gespült und langsam bis auf 202°C erwärmt. Dabei destillierten insgesamt 29 ml Wasser ab. Der Ansatz wurde anschliessend auf ca. 160°C heruntergekühlt und 147 g p-Dichlorbenzol in ca. 50 g N-Methyl-2-pyrrolidon hinzugefügt. Man erwärmt das Reaktionsgemisch unter einem Stickstoffvordruck von 2,5 bar in 30 Min. auf 245°C, wobei der Druck auf 10 bar ansteigt, und hält diese Temperatur 3 Stunden. Nach Abkühlen auf Raumtemperatur wird ein grauer Feststoff isoliert, der anschliessend einer sorgfältigen Wasserwäsche zur Entfernung der anorganischen Beimengungen unterworfen wird.

Man trocknet bei 80°C im Vakuum und erhält 100,3 g (93%) Poly-(p-phenylensulfid) mit folgenden Kenndaten:

| | |
|---|---|
| Grenzviskositätszahl $[\eta]$: | 10,2 |
| Schmelzfliessverhalten g/10 Min.: | 2400 |

Beispiel 2

Nach dem erfindungsgemässen Verfahren wurde das Dinatriumsalz der Methanphosphonsäure als Katalysator eingesetzt.

Zu 1000 ml N-Methyl-2-pyrrolidon wurde diese Lösung von 262,5 g (1,87 Mol) des Dinatriumsalzes der Methanphosphonsäure ($CH_3PO_3Na_2$) in 200 g Wasser gegeben, und die Gesamtmischung unter Stickstoff gehalten. Durch langsames Aufheizen bis 172°C wurden 185 ml Wasser in Form eines 92% Wasser enthaltenden Wasser/N-Methyl-2-pyrrolidon-Gemisches abdestilliert.

Anschliessend wurden 245,7 g 60 %iges Natriumsulfid ($Na_2S$ x 3 $H_2O$) (1,87 Mol) und 12 g Natriumhydroxid in 40 ml Wasser zugegeben. Die zweite Entwässerung wurde analog zur ersten gefahren, mit dem Unterschied, dass bis auf 202°C aufgeheizt wurde. Hierbei wurde ein Destillat aufgefangen, dass 121 ml Wasser enthielt.

Nach Abkühlen auf 160°C wurden 275,6 g p-Dichlorbenzol (1,87 Mol) und 2,72 g 1,2,4-Trichlorbenzol (0,8 Mol-%, bezogen auf den Anteil p-Dichlorbenzol) in 120 ml N-Methyl-2-pyrrolidon zur Reaktionslösung gegeben und der Anstatz in einem Autoklaven mit Rührer nach folgendem Druck/Temperatur-Programm gefahren:

| | | |
|---|---|---|
| 1 Stunde | 210°C | 3 bar |
| 2 Stunden | 245°C | 11 bar |
| 3 Stunden | 265°C | 13 bar |

Danach wurde heruntergekühlt und aus dem Reaktionsgemisch z.B. durch Verdünnen mit Wasser das Poly-p-phenylensulfid als graues Pulver isoliert. Nach Trocknen ergab sich eine Ausbeute von 99% (200,2 g). Das Poly-p-phenylensulfid hatte im Vergleich zu Beispiel 1 eine erheblich höhere Grenzviskositätszahl und einen deutlich niedrigeren Schmelzfluss.

| | |
|---|---|
| Grenzviskositätszahl $[\eta]$: | 25 |
| Schmelzfliessverhalten g/10 Min: | 89 |

Beispiel 3

Im Vergleich zu Beispiel 2 wurde hier nur eine Entwässerungsstufe durchgeführt:

Eine Lösung von 262,5 g (1,87 Mol) des Dinatriumsalzes der Methan-phosphonsäure in 299 g Wasser, 245,7 g 60 %iges Natriumsulfid (1,87 Mol, $Na_2S$ x 3 $H_2O$) und 12 g Natriumhydroxid in 40 g Wasser wurden nacheinander zu 1000 ml N-Methyl-2-pyrrolidon gegeben. Unter Stickstoff wurde langsam aufgeheizt bis die Temperatur in der Endstufe 202°C erreichte. Dabei wurden 357 ml eines Destillats erhalten, das 314 ml Wasser enthielt.

Anschliessend wurden 275,6 g p-Dichlorbenzol

(1,87 Mol) und 2,04 g 1,2,4-Trichlorbenzol (0,6 Mol-% bezogen auf den Anteil p-Dichlorbenzol) hinzugegeben und der Ansatz nach dem gleichen Druck/Temperatur-Programm wie in Beispiel 2 gefahren. Nach Abfiltrieren und Wasserwäsche erhält man 199,8 g (99%) Poly-p-phenylensulfid.
Grenzviskositätszahl [η]: 18
Schmelzfliessverhalten g/10 Min.: 358

Beispiel 4

In diesem Beispiel wird das katalytisch wirksame Dinatriumsalz der Methan-phosphonsäure direkt in der Reaktionslösung erzeugt. In 1000 ml N-Methyl-2-pyrrolidon wurden unter Berücksichtigung der exothermen Neutralisation und unter Stickstoffatmosphäre eine Lösung von 150 g Natriumhydroxid in 150 g Wasser und 180 g Methan-phosphonsäure in 150 g Wasser vorsichtig zusammengegeben.

Anschliessend wurden unter langsamer Temperatursteigerung des Reaktionsgemisches bis 170°C 288 ml Wasser in 312 ml Gesamtdestillat aus N-Methyl-2-pyrrolidon und Wasser erhalten.

Danach wurden 245,7 g 60 %iges Natriumsulfid (1,87 Mol) und 20 g Natriumhydroxid in 40 g Wasser hinzugefügt.

Die zweite Entwässerungsstufe wurde dann entsprechend durchgeführt, wobei die Temperatur bis auf 202°C gesteigert wurde. Es wurden 180 ml Destillat aufgefangen, das 138 ml Wasser enthielt.

Nach Abkühlen auf 160°C wurden 275,6 g p-Dichlorbenzol (1,87 Mol) und 2,72 g 1,2,4-Trichlorbenzol (0,8 Mol-% bezogen auf den Anteil p-Dichlorbenzol) in 120 ml N-Methyl-2-pyrrolidon zugegeben und der Ansatz in einem Autoklaven mit Rührer nach dem Druck/Temperatur-Programm in Beispiel 2 gefahren. Die Aufarbeitung erfolgte ebenfalls gemäss Beispiel 2.
Ausbeute: 201,0 g (99%) Poly-p-phenylensulfid
Grenzviskositätszahl [η]: 26,5
Schmelzfliessverhalten g/10 Min.: 68

Beispiel 5

Die Reaktionsführung entspricht der in Beispiel 2. Es wurde jedoch nun im Vergleich zu Beispiel 2 nur die halbe molare Menge an Dinatriumsalz der Methanphosphonsäure (131,25 g = 0,937 Mol) eingesetzt. Poly-p-phenylensulfid wurde in 99 %iger Ausbeute erhalten.
Grenzviskositätszahl [η]: 23,5
Schmelzfliessverhalten g/10 Min.: 95

Beispiel 6

Die Reaktionsführung ist analog Beispiel 5, mit dem Unterschied, dass anstelle des Dinatriumsalzes der Methan-phosphonsäure das Dikaliumsalz (161, 3 g = 0,937 Mol) eingesetzt wurde.
Ausbeute: 99%.
Grenzviskositätszahl [η]: 22
Schmelzfliessverhalten g/10 Min.: 132

Beispiel 7

Die Reaktionsführung ist analog Beispiel 5, mit dem Unterschied, dass 157, 4 g (0,937 Mol) des Dinatriumsalzes der Propan-2-phosphonsäure eingesetzt wurden.
Ausbeute: 99%.
Grenzviskositätszahl [η]: 23
Schmelzfliessverhalten g/10 Min.: 110

Beispiel 8

Die Reaktionsführung ist analog Beispiel 5, mit dem Unterschied, dass 71,2 g (0,47 Mol) des Dinatriumsalzes der Vinyl-1-phosphonsäure eingesetzt wurde.
Ausbeute: 99%.
Grenzviskositätszahl [η]: 19
Schmelzfliessverhalten g/10 Min.: 280

Beispiel 9

Die Reaktionsführung ist analog Beispiel 8, jedoch mit dem Unterschied, dass anstelle des Dinatriumsalzes der Vinyl-1-phosphonsäure das Dinatriumsalz der 2-Methyl-propen-2-phosphonsäure in gleicher molarer Menge eingesetzt wurde.
Ausbeute: 99%.
Grenzviskositätszahl [η]: 17
Schmelzfliessverhalten g/10 Min.: 312

## Patentansprüche

1. Verfahren zur Herstellung von Polyarylensulfiden durch Umsetzung von

a) p-Dihalogen benzolen, die aus 50 bis 100 Mol-% Verbindungen der Formel 1

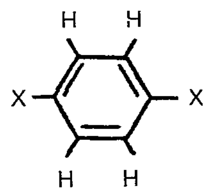

1

und aus 0 bis 50 Mol-% Verbindungen der Formel 2 bestehen,

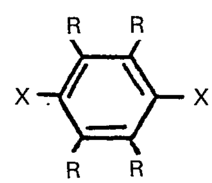

2

wobei X gleich oder verschieden ist und R Fluor, Chlor, Brom oder Jod ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei jeweils mindestens ein R verschieden von Wasserstoff ist, und

b) 0 bis 2,0 Mol-%, bezogen auf den p-Dihalogenbenzolanteil eines Polyhalogenaromaten der Formel 3

$$Ar\,X_n \qquad 3$$

wobei Ar ein beliebiger aromatischer Rest mit 6 bis 24 C-Atomen und mindestens 3 freien Wertigkeiten ist, X die gleiche Bedeutung wie in Formel 1 und 2 hat und $n \geqslant 3$ ist, mit einem

c) Alkalisulfid in einem

d) polaren Lösungsmittel,
wobei das molare Verhältnis von a) zu c) im Bereich von 0,98:1 bis 1,02:1 und von c) zu d) im Bereich 1:1 bis 1:10 liegt, bei einer Polykondensationszeit von bis zu 60 Stunden und einer Polykondensationstemperatur zwischen 160 und 285 °C, dadurch gekennzeichnet, dass die Reaktion in Anwesenheit von 0,05 - 2,0 Mol, bezogen auf 1 Mol Alkalisulfid, von Dialkalisalzen von Phosphonsäuren der allgemeinen Formel 4,

O
‖
$R_1$-P-OH    4
|
OH

in der $R_1$ die Bedeutung von R aus der Formel 2 haben und ausserdem ein $C_2$-$C_{20}$-Alkenyl, $C_2$-$C_{20}$-Alkinyl oder $C_5$-$C_{20}$-Cycloalkenyl sein kann, durchgeführt wird.

2. Verfahren gemäss Anspruch 1, dadurch gekennzeichnet dass die Polykondensationszeit 2 bis 15 Stunden beträgt.

3. Verfahren gemäss Ansprüche 1 und 2, dadurch gekennzeichnet, dass die Reaktionstemperatur zwischen 190°C und 275°C liegt.

4. Verfahren gemäss Ansprüche 1 bis 3, dadurch gekennzeichnet, dass die Reaktion in Gegenwart von 0,1 bis 1,5 Mol von Dialkalisalzen von Phosphonsäuren der Formel 4 durchgeführt wird.

5. Verfahren gemäss Ansprüche 1 bis 4, dadurch gekennzeichnet, dass die Reaktion in Anwesenheit von Dinatriumsalzen von Phosphonsäuren der Formel 4 durchgeführt wird.

6. Verfahren gemäss Ansprüche 1 bis 4, dadurch gekennzeichnet, dass die Dialkalisalze der Phosphonsäuren in Form ihrer Hydrate oder in wässrigen Mischungen in Form ihrer Hydrate oder in wässrigen Mischungen eingesetzt werden und vor der Zugabe der p-Dihalogenbenzole ein- oder mehrstufig entwässert werden.

7. Verfahren gemäss Anspruch 6, dadurch gekennzeichnet, dass Dinatriumsalze der Phosphonsäuren als Hydrate oder wässrige Mischungen eingesetzt werden.

## Claims

1. Process for the preparation of polyarylene sulphides by reacting

a) p-dihalogenbenzenes which consist of 50 to 100 mol % of compouds of the formula 1

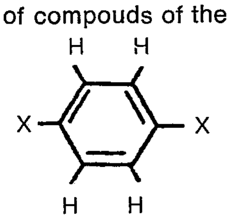

1

and of 0 to 50 mol % of compounds of the formula 2

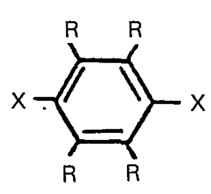

2

wherein

X is identical or different and is fluorine, chlorine, bromine or iodine and

the symbols R are identical or different and can be hydrogen, $C_1$-$C_{20}$-alkyl, $C_5$-$C_{20}$-cycloalkyl, $C_6$-$C_{24}$-aryl, $C_7$-$C_{24}$-alkaryl or $C_7$-$C_{24}$-aralkyl, and in each case at least one R is other than hydrogen,

and

b) O to 2,0 mol %, relative to the p-dihalogenobenzene constituent, of a polyhalogenoaromatic compound of the formula 3

$Ar\,X_n$    3

wherein

Ar is any desired aromatic radical with 6 to 24 C atoms and at least 3 free valencies,

X has the same meaning as in formulae 1 and 2 and $n \geqslant 3$,

with

c) an alkali metal sulphide in

d) a polar solvent, the molar ratio of a) to c) being in the range from 0,98:1 to 1,02:1 and the molar ratio of c) to d) being in the range from 1:1 to 1:10, over a polycondensation period of up to 60 hours, and at a polycondensation temperature of between 160 and 285 °C, characterised in that the reaction is carried out in the presence of 0,05 - 2,0 mols per 1 mol of alkali metal sulphide, of di-alkali metal salts of phosphonic acids of the general formula 4

O
‖
$R_1$-P-OH    4
|
OH

in which

$R_1$ has the meaning of R from formula 2 and can also be $C_2$-$C_{20}$-alkenyl, $C_2$-$C_{20}$-alkinyl or $C_5$-$C_{20}$-cycloalkenyl.

2. Process according to Claim 1, characterised in that the polycondensation time is 2 to 15 hours.

3. Process according to Claims 1 and 2, characterised in that the reaction temperature is between 190°C and 275°C.

4. Process according to Claims 1 to 3, characterised in that the reaction is carried out in the presence of 0,1 to 1,5 mols of di-alkali metal salts of phosponic acids of the formula 4.

5. Process according to Claim 1 to 4, characterised in that the reaction is carried out in the presence of disodium salts of phosphonic acids of the formula 4.

6. Process according to Claims 1 to 4, characterised in that the di-alkali metal salts of the phosphonic acids are used in the form of their hydrates or in aqueous mixtures in the form of

their hydrates or in aqueous mixtures and are dehydrated once or several times before the addition of the p-dihalogenobenzenes.

7. Process according to Claim 6, characterised in that the disodium salts of the phosphonic acids are employed as the hydrates or as aqueous mixtures.

## Revendications

1. Procédé pour la fabrication de sulfures de polyarylènes par réaction

a) de p-dihalogénobenzènes qui consistent en 50 à 100 mol % de composés de formule 1

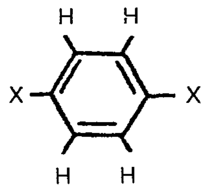

1

et en 0 à 50 mol % de composés de formule 2

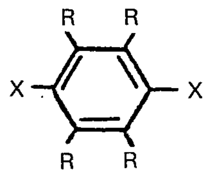

2

dans laquelle

les restes X sont identiques ou différents et représentent chacun le fluor, le chlore, le brome ou l'iode et

les restes R sont identiques ou différents et peuvent être chacun l'hdrogène ou un groupe alkyle en $C_1$-$C_{20}$, cycloalkyle en $C_5$-$C_{20}$, aryle en $C_6$-$C_{24}$, alkylaryle en $C_7$-$C_{24}$ ou arylalkyle en $C_7$-$C_{24}$, l'un au moins des restes R étant chaque fois différent de l'hydrogène et

b) de 0 à 2,0 mol %, par rapport à la proportion de p-dihalogénobenzènes, d'un composé polyhalogénoaromatique de formule 3

$Ar X_r$ 3

dans laquelle Ar est un reste aromatique quelconque en $C_6$-$C_{24}$ et ayant au moins 3 valences libres, X a la même signification que dans les formules 1 et 2 et $n \geqslant 3$,

avec

c) un sulfure alcalin

dans

d) un solvant polaire, de préférence un amide ou un lactame, en particulier un N-alkyllactame,

le rapport molaire de a) à c) étant de 0,98:1 à 1,02:1 et le rapport molaire de c) à d) étant de 1:1 à 1:10, pendant une durée de polycondensation allant jusqu'à 60 h, et à une température de polycondensation de 160 à 285°C, qui est caractérisé en ce que la réaction est effectuée en présence de 0,05-2,0 mol, pour 1 mol de sulfure alcalin, de sels dialcalins, d'acides phosphoniques de formule générale 4

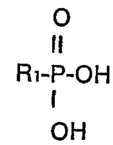

4

dans laquelle $R_1$ a la signification de R dans la formule 2 et peut être en outre un groupe alcényle en $C_2$-$C_{20}$, alcynyle en $C_2$-$C_{20}$ ou cycloalcényle en $C_5$-$C_{20}$.

2. Procédé selon la revendication 1, caractérisé en ce que la durée de polycondensation est de 2 à 15 h.

3. Procédé selon les revendications 1 et 2, caractérisé en ce que la température de réaction est comprise entre 190 et 275°C.

4. Procédé selon les revendications 1 à 3, caractérisé en ce que la réaction est effectuée en présence de 0,1 à 1,5 mol de sels dialcalins d'acides phosphoniques de formule 4.

5. Procédé selon l'une des revendications 1 à 4, caractérisé en ce que la réaction est effectuée en présence de sels disodiques d'acides phosphoniques formule 4.

6. Procédé selon les revendications 1 à 4, caractérisé en ce que l'on utilise les sels dialcalins des acides phosphoniques sous forme de leurs hydrates ou dans des mélanges aqueux et on met en oeuvre une ou plusieurs étapes de déshydratation avant l'addition des p-dihalogénobenzènes.

7. Procédé selon la revendication 6, caractérisé en ce que les sels disodiques des acides phosphoniques sont utilisés sous forme d'hydrates ou de mélanges aqueux.